# EUROPEAN PATENT APPLICATION

(11) **EP 4 461 440 A1**
(43) Date of publication of application: **13.11.2024**
(21) Application number: 24169409.0
(22) Date of filing: 10.04.2024
(51) Int. Cl.: B22F 5/00, B28B 3/08

(54) **A COMPRESSION MOLD FOR FORMING CARBIDE DRILLING INSERTS**

(30) Priority: 18.04.2023 CN 202310417930
(71) Applicant: Bosch Power Tools (China) Co., Ltd., Zhejiang 310052 (CN)
(72) Inventor: JI, Haifeng, Zhejiang, 310052 (CN); YANG, Zhenglin, Zhejiang, 310052 (CN); Lei, Bingfu, Zhejiang, 310052 (CN)
(74) Representative: Bee, Joachim

(57) **Abstract**

A compression mold for forming carbide drilling inserts with a mold coordinate system bounded by a mold width direction X2, a mold thickness direction Y2 and a mold longitudinal direction Z2, and comprising an upper punch, a lower punch, and a center mold. The compression mold is suitable for the forming of inserts where at least one of the two cutting faces of the insert is a straight groove surface formed by moving a straight generatrix parallel along a two-dimensional guide path. The profile of the mold cavity of the compression mold projected onto the X2-Y2 plane is designed to be identical to the outer profile of the insert projected onto the X2-Y2 plane, and a portion of the mold cavity walls coincides with the straight groove surfaces on the insert, with the longitudinal direction of the mold parallel to the straight generatrix of the straight groove surfaces.

## Description

### Technical Field

The present application relates to a compression mold for forming carbide drilling inserts by inclined compression.

### Background Art

Carbide drilling inserts for drill bits are typically formed by powder metallurgy. The powder material is compressed inside the mold to form semi-finished inserts. After the semi-finished inserts are sintered, they need to be grounded with grinding tools to form a sufficiently sharp cutting edge.

Conventional molds for forming semi-finished inserts typically include a medium mold, an upper punch, and a lower punch. The center mold defines the mold cavity, while the upper punch and lower punch may be inserted from above and below, respectively, into the mold cavity to compress the powdered material filled into the mold cavity, thereby forming semi-finished inserts. To achieve sufficient compression density, the direction of movement of the upper and lower punches generally correspond to the height direction or width direction of the inserts. For compression in the height direction, the cutting edge is defined entirely by the upper punch or lower punch, and the cutting edge is fully embedded in the upper punch or lower punch. For compression in the width direction, the cutting edge is defined by a combination of the upper punch and lower punch, with the cutting edge partially embedded in the upper punch and partially embedded in the lower punch. Whether it is compression in the height direction or compression in the width direction, in order to avoid breakage of the cutting edge area of semi-finished inserts due to adhesion to the punches during demolding, the punches cannot be designed to form a cutting edge with a high degree of sharpness. In addition, due to the processing capabilities of the punches, it is also difficult to process the punches to form a cutting edge with a high degree of sharpness. Furthermore, because the cutting edge is embedded in the punches, it is difficult to achieve the desired compression ratio of the material used to form the cutting edge.

### Summary of the Invention

The present application is intended to provide a new compression mold for forming carbide drilling inserts capable of solving at least one problem identified in the prior art.

According to one aspect of the present disclosure, a compression mold for forming carbide drilling inserts is provided, wherein the insert has an insert coordinate system defined by the X1-Y1-Z1 directions, with the X1 direction corresponding to the insert width direction, the Y1 direction corresponding to the insert thickness direction, and the Z1 direction corresponding to the insert axial direction, and wherein the front face of the insert comprises two cutting faces, with the intersection between the two cutting faces forming a cutting edge, and at least one of the two cutting faces is formed by moving a straight generatrix along a two-dimensional guide path to form a straight groove surface;
the compression mold has a mold coordinate system defined by the X2-Y2-Z2 directions, wherein the X2 direction corresponds to the mold width direction, the Y2 direction corresponds to the mold thickness direction, and the Z2 direction corresponds to the mold longitudinal direction, and wherein the compression mold comprises an upper punch, a lower punch, and a center mold, with the center mold having a mold cavity defined by mold cavity walls and accessible from the top and bottom, and the upper punch and lower punch each form a forming face;
the upper punch and lower punch are configured to be adapted for insertion along the longitudinal direction of the mold into the mold cavity from above and below, respectively, and to compress carbide powder filled into the mold cavity via the respective forming faces, thereby defining a shaping space formed by the respective forming faces of the upper punch and lower punch as well as the mold cavity walls at the final compression position, with the carbide powder shaped into the insert within the shaping space;
among them, the profile of the mold cavity projected onto the X2-Y2 plane is designed to be the same as the outer profile of the insert formed within the shaping space in the X2-Y2 plane, and a portion of the mold cavity walls coincides with the straight groove surfaces on the insert formed within the shaping space, with the mold longitudinal direction parallel to the straight generatrix of the straight groove surfaces.

In one embodiment, the profile of the mold cavity projected onto the X2-Y2 plane is a closed loop, and a segment of this loop coincides with the two-dimensional guide path of the straight groove surfaces on the formed insert.

In one embodiment, the segment comprises a continuous two-dimensional curve. Alternatively, the segment is composed of a combination of different line segments, with smooth transitions between each segment; for example, the segment may comprise a combination of different curved segments, or a combination of curved segments and straight segments.

In one embodiment, the forming face of the upper punch is configured to shape the insert portion located at the upper part of the outer profile of the insert projected onto the X2-Y2 plane; the forming face of the lower punch is configured to shape the insert portion located at the lower part of the outer profile of the insert projected onto the X2-Y2 plane.

In one embodiment, the forming face of the upper punch comprises a portion used to form the other cutting face out of the two cutting faces.

In one embodiment, the two cutting faces are straight groove surfaces formed by the parallel movement of their respective straight generatrixes along their respective two-dimensional guide paths.

In one embodiment, the final compression position, the boundary line between the forming face of the upper punch and the mold cavity walls contains a segment that overlaps with the entire cutting edge of the formed insert.

In one embodiment, at the final compression position, a peripheral portion of the forming face of the upper punch is separated from a corresponding peripheral portion of the forming face of the lower punch by a first gap, wherein the first gap is enclosed by the mold cavity walls, and the straight groove surfaces formed on the formed insert is formed within the first gap.

In one embodiment, at the final compression position, another peripheral portion of the forming face of the upper punch is separated from another corresponding peripheral portion of the forming face of the lower punch by a second gap, wherein the second gap is enclosed by the mold cavity walls, and the chamfer between the bottom surface and another main surface of the formed insert is formed by the corresponding portion of the forming face of the lower punch.

In one embodiment, the angular position of the insert formed at the final compression position is defined in the following manner: when viewed in the Y2-Z2 plane, the Y1 direction of the formed insert deviates from the Y2 direction by a first deviation angle; when viewed in the X2-Z2 plane, the X1 direction of the formed insert deviates from the X2 direction by a second deviation angle. For example, the first deviation angle is set in the range of 10 - 60 degrees, preferably 30 - 40 degrees; the second deviation angle is set in the range of 30 - 70 degrees, preferably 40 - 60 degrees.

In one embodiment, the angular position of the insert formed at the final compression position is defined in the following manner: assuming that the insert starts from an angular position where the X1-Y1-Z1 directions are parallel to the X2-Y2-Z2 directions, respectively, it first rotates by a first rotation angle around its X1 direction to generate new Y1 and Z1 directions, and then rotates by a second rotation angle around the new Y1 direction, thus giving the angular position of the formed insert at the final compression position. For example, the first rotation angle is set in the range of 10 - 60 degrees, preferably 30 - 40 degrees; the second rotation angle is set in the range of 30 - 70 degrees, preferably 40 - 60 degrees.

According to the present application, the cutting edge of a carbide drilling insert is defined by two curved surfaces, with the cutting edge formed by the intersection of these two curved surfaces, at least one of which is a straight groove surface. The profile of a portion of the cross-section of the mold cavity of the compression mold is identical to the projection of the straight groove surfaces of the insert to be formed in a plane perpendicular to its straight generatrix, such that the straight groove surfaces of the insert to be formed is located in the mold cavity walls along the axial direction of the mold cavity, i.e., the direction of movement of the upper punch and lower punch in the mold cavity. This configuration ensures that inserts formed by compression can be smoothly demolded from the mold cavity. At the same time, the fact that the cutting edge is located between the upper punch and the mold cavity walls rather than being embedded in either punch avoids breakage due to adhesion to the punches during demolding, and achieves the desired compression ratio as well as sharpness of the cutting edge area.

### Description of Attached Drawings

The various aspects of the present application will be more fully understood from the following detailed description in conjunction with the following accompanying drawings. In the accompanying drawings:
FIG. 1 - FIG. 3 respectively show the front view, top view, and side view of a drilling insert capable of being formed by a compression mold according to the present application;
FIG. 4 and FIG. 5 respectively show the schematic diagram and an exploded view of the compression mold according to the present application;
FIG. 6 - FIG. 8 respectively show the schematic perspective views of the upper punch, lower punch and center mold of the compression mold according to the present application;
FIG. 9 and FIG. 10 respectively show the perspective views of both sides of the compression mold according to the present application in the closed state;

### Specific Embodiments

Feasible embodiments of a compression mold according to the present application are described below with reference to the accompanying drawings. It should be noted that the accompanying drawings are intended to clearly illustrate the principles of the present application. Therefore, some details have been omitted, and the accompanying drawings are not drawn to scale or actual shape.

The present application generally relates to a compression mold for forming carbide drilling inserts by inclined compression. The compression mold is used to compress carbide powder into semi-finished inserts, which are then sintered and ground with grinding tools to form finished inserts. The inserts may be secured to a drill shank to form a drill bit, which is suitable for drilling hard materials, especially stone and the like.

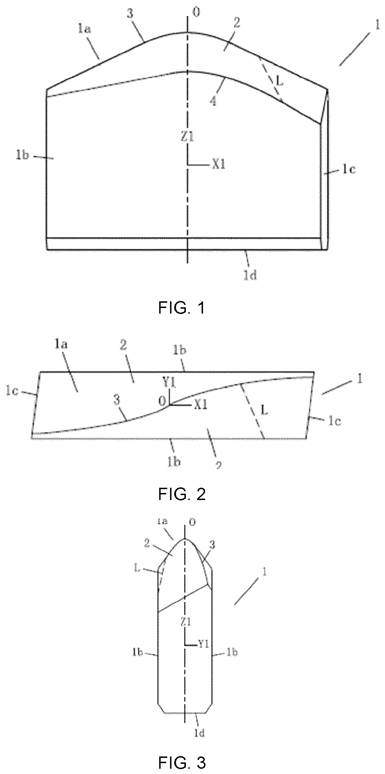

The drill bits that can be formed by the compression mold of the present application are schematically shown in FIG. 1 - FIG. 3.

As shown in the figures, the drilling insert (hereinafter referred to as the insert) 1 is substantially flat. The insert 1 has a height direction (axial direction) Z1, a width direction (transverse direction) X1, and a thickness direction Y1. During drilling, the rotational axis O of the insert 1 is along the axial direction Z1. These three directions, i.e. X1, Y1, and Z1, define the insert coordinate system.

The insert 1 has a front face (the face facing the material being drilled during drilling) 1a located on the front side along the axial direction Z1, two main surfaces 1b that are opposite to each other in the thickness direction Y1 and that are typically parallel to each other, two side surfaces 1c that are opposite to each other in the width direction X1 and that are typically parallel to each other, and a bottom surface 1d located on the rear side along the axial direction Z1. A chamfer is formed between the bottom surface 1d and each of the two main surfaces 1b.

The front face 1a protrudes forward along the axial direction. The front face 1a comprises two curved surfaces, each forming a cutting face 2, with the intersection between the two cutting faces 2 forming a cutting edge 3. The two ends of the cutting edge 3 may terminate at the corresponding side surfaces 1c as shown in the figure, or they may terminate at the corresponding main surfaces 1b (not shown).

The rotational axis O is preferably designed to be located in the center of the cutting edge 3.

At least one of the curved surfaces constituting the two cutting faces 2 is a straight groove surface, which is a special straight groove surface formed by moving a straight generatrix parallel along a two-dimensional guide path. In other words, the straight groove surface may be considered to be composed of numerous straight generatrixes that intersect with the two-dimensional guide path and are parallel to each other. A straight generatrix L is schematically illustrated in FIG. 1 - FIG. 3. In a plane perpendicular to the straight generatrix line L, the straight groove surface is projected as the two-dimensional guide path.

When the curved surfaces forming the two cutting faces 2 are straight groove surfaces, the two cutting faces 2 may (though not mandatory) be designed to be substantially rotationally symmetrical about the rotational axis O, such that the cutting edge 3 has a shape that is substantially rotationally symmetric about the rotational axis O.

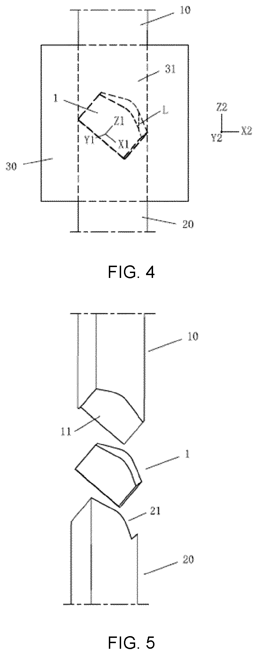

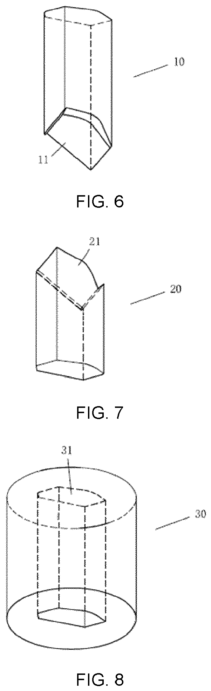

The compression mold of the present application for forming the previously described insert 1 is schematically represented in FIG. 4 - FIG. 8. As shown in the figure, the compression mold comprises an upper punch 10, a lower punch 20, and a center mold (female mold) 30. The center mold 30 has a mold cavity 31 defined by upper and lower extending mold cavity walls that is accessible from the top and bottom. The upper punch 10 and lower punch 20 may be inserted from the top and bottom of the center mold 30 into the mold cavity 31 to compress the carbide powder filled into the mold cavity 31 and form the semi-finished insert 1.

The compression mold defines a mold coordinate system having three orthogonal directions X2, Y2 and Z2, where Z2 is the longitudinal direction and indicates the direction of passage of the mold cavity 31, i.e., the direction of movement of the upper punch 10 and the lower punch 20 in the mold cavity 31; X2 and Y2 are the width direction and the thickness direction, respectively.

The profile of the mold cavity 31 projected onto the X2-Y2 plane (i.e., the profile of the mold cavity walls projected onto the X2-Y2 plane) is designed in the manner described below. Referring to FIG. 4, assume that the insert 1 to be formed is placed inclined in the center mold 30 such that the straight generatrix L of the straight groove surface of the cutting face 2 is along the longitudinal direction Z2. It should be noted that in the case where one of the two cutting faces 2 is a straight groove surface, the straight groove surface is selected here; in the case where both cutting faces 2 are straight groove surfaces, either one of the straight groove surfaces may be selected here. The cutting face 2 composed of the selected straight groove surface is referred to as the first cutting face, while the other cutting face is referred to as the second cutting face.

In the state where the hypothetical insert 1 is placed inclined in the center mold 30, the outer profile of the insert 1 projected onto the X2-Y2 plane when viewed along the longitudinal direction Z2 is taken as the profile of the mold cavity 31 projected onto the X2-Y2 plane. At the same time, the outer profile of the insert 1 projected onto the X2-Y2 plane is also taken as the outer profile of the portion of the upper punch 10 and the lower punch 20 to be inserted into the mold cavity 31. The space occupied by the hypothetical inclined insert 1 in the center mold 30 is referred to as the shaping space.

To quantify the inclination angle of the insert 1 to be formed relative to the center mold 30, the inclination angle of the insert 1 may be quantified based on its final position relative to the center mold 30, i.e., it is assumed that before the insert 1 is inclined, it has an insert coordinate system that is consistent with the mold coordinate system, wherein the directions X1, Y1 and Z1 are parallel to the directions X2, Y2 and Z2, respectively. After the insert 1 is inclined in the manner described above, when viewed in the Y2-Z2 plane, the Y1 direction deviates from the Y2 direction by a first deviation angle; when viewed in the X2-Z2 plane, the X1 direction deviates from the X2 direction by a second deviation angle. The first deviation angle is set in the range of 10 - 60 degrees, preferably 30 - 40 degrees. The second deviation angle is set in the range of 30 - 70 degrees, preferably 40 - 60 degrees.

Alternatively, the inclination angle of the insert 1 may be quantified based on the rotational process of the insert 1 relative to the center mold 30, i.e., it is assumed that before the insert 1 is inclined, it has an insert coordinate system that is consistent with the mold coordinate system, that is, the directions X1, Y1 and Z1 are parallel to the directions X2, Y2 and Z2, respectively. First, the insert 1 is rotated around its X1 direction by a first rotation angle, resulting in new coordinate directions Y1 and Z1; then the insert 1 is rotated around the new Y1 direction by a second rotation angle, thus giving the hypothetical inclined position of the insert 1. The first rotation angle is set in the range of 10 - 60 degrees, preferably 30 - 40 degrees. The second rotation angle is set in the range of 30 - 70 degrees, preferably 40 - 60 degrees.

The profile (i.e., the cross-sectional profile) of the mold cavity 31 projected onto the X2-Y2 plane is a closed loop, which is composed of several line segments, with one line segment coinciding with the two-dimensional guide path of the straight groove surfaces on the insert 1. Having thus determined the cross-sectional profile of the mold cavity 31, the mold cavity 31 is also determined in the center mold 30. In fact, the mold cavity walls are also straight groove surfaces formed by moving a straight generatrix along the Z2 direction, parallel to the loop, for one revolution. A portion of the loop corresponds to the two-dimensional guide path of the straight groove surfaces on the insert 1. In other words, a segment of the loop coincides with the two-dimensional guide path used to form the straight groove surfaces on the insert 1. The segment may generally be designed to comprise a continuous curve (two-dimensional curve). Alternatively, the segment may also be designed to be composed of a combination of different line segments, with smooth transitions between each segment. The combination of the line segments may be a combination of different curved segments (two-dimensional curved segments), or a combination of curved segments (two-dimensional curved segments) and straight line segments.

Based on the outer profile of the hypothetical inclined insert 1 projected onto the X2-Y2 plane, the outer profile of the portion of the upper punch 10 and the lower punch 20 to be inserted into the mold cavity 31 projected onto the Y2-Z2 plane may be determined. Of course, it is understood that there is a need to leave a mating gap between the upper punch 10 and the lower punch 20 and the mold cavity walls. Further, based on the outer profile of the hypothetical inclined insert 1 projected onto the Y2-Z2 plane, and the positions of the insert 1 above and below the outer profile, the profiles of the forming face 11 of the upper punch 10 and the forming face 21 of the lower punch 20 (i.e., the faces of the upper and lower punches facing and compressing the carbide powder) may be determined. Of the two cutting faces 2 of the insert 1, the second cutting face is formed by a corresponding part of the forming face 11 of the upper punch 10.

In this way, the profiles of the corresponding parts of the various components of the compression mold are designed based on the hypothetical inclined insert 1. During the compression molding process of insert 1, the lower punch 20 can first be inserted from below into the mold cavity 31 of the center mold 30, the carbide powder can be filled into the mold cavity 31 from above, and then the upper punch 10 can be inserted from above into the mold cavity 31 and moved downward along the mold cavity 31. During the downward movement of the upper punch 10 along the mold cavity 31, the lower punch 20 remains stationary or moves upward. In this way, the carbide powder is compressed in the mold cavity 31. The final compression position of the upper punch 10 and the lower punch 20 in the compression process is schematically shown in FIG. 4, at which point the space containing the fully compressed carbide powder present between the upper punch 10 and the lower punch 2 is the shaping space. The shaping space is enclosed by the combination of the upper punch 10, lower punch 20, and center mold 30, with the semi-finished insert 1 in it. The outer profile of the shaping space projected onto the Y2-Z2 plane corresponds to the outer profile of the insert 1 projected onto the Y2-Z2 plane. At the final compression position, the boundary line between the forming face 11 of the upper punch 10 and the mold cavity walls contains a segment that overlaps with the entire cutting edge 3.

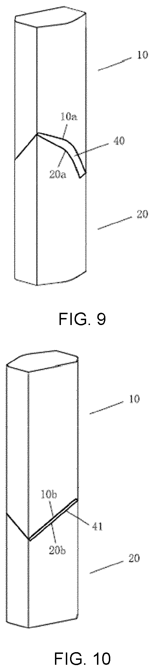

It should be noted that a portion of the mold cavity walls need to fully coincide with one straight groove surface (or one of the two straight groove surfaces) of the hypothetical inclined insert 1, and the longitudinal direction Z2 of the mold is parallel to the straight generatrix of the straight groove surface of the inclined insert 1, thereby achieving smooth demolding of the insert 1 formed in the shaping space. Therefore, when viewed from the thickness direction side of the compression mold, as shown in FIG. 9, at the final compression position, i.e., the state in which the carbide powder is fully compressed, there is a gap 40 between the outer peripheral portion 10a of the forming face 11 of the upper punch 10 located above the straight groove surface and the corresponding outer peripheral portion 20a of the forming face 21 of the lower punch 20 located below the straight groove surface. The gap 40 is enclosed by the mold cavity walls and the straight groove surface is formed in the gap 40.

The outer peripheral portion 10a corresponds to the entire cutting edge 3, specifically the segment that overlaps with the entire cutting edge 3 contained within the boundary line between the forming surface 11 of the upper punch 10 and the mold cavity walls.

Furthermore, optionally, when viewed from the thickness direction side of the compression mold, as shown in FIG. 10, in the state where the carbide powder is fully compressed, there is a gap 41 between the outer peripheral portion 10b of the forming face 11 of the upper punch 10 and the corresponding outer peripheral portion 20b of the forming face 21 of the lower punch 20. The gap 41 is enclosed by the mold cavity walls, and a chamfer between the bottom surface 1d of the insert and a main surface 1b (the chamfer on the side opposite to the selected straight groove surface in the thickness direction of the insert 1, as shown in FIG. 1 and FIG. 3.) is formed in the gap 41. The chamfer between the bottom surface 1d and another main surface 1b is formed by the corresponding portion of the forming face 21 of the lower punch 20.

It should be noted that in the field of compression molds, the typical design process involves designing the profiles of various components of the compression mold based on the outer profile (including shape and dimensions) of the product to be formed by compression molding. Therefore, the proposed method in the present application of designing the profiles of the upper punch 10, lower punch 20, and center mold 30 of the compression mold based on the profile of a hypothetical inclined insert 1 is in line with the customary design practices in this field, and is therefore practical.

In the compression mold according to the present application, the shaping space is designed based on a hypothetical inclined insert, so the carbide powder in the mold cavity is compressed in an inclined manner relative to the semi-finished insert that is expected to be formed. At least one cutting face of the insert is a straight groove surface. The profile of a portion of the cross-section of the mold cavity of the compression mold is identical to the projection of the straight groove surfaces of the insert to be formed in a plane perpendicular to its straight generatrix, such that the straight groove surfaces of the insert to be formed is located in the mold cavity walls along the axial direction of the mold cavity, i.e., the direction of movement of the upper punch and lower punch in the mold cavity. This configuration ensures that inserts formed by compression can be smoothly demolded from the mold cavity without any structural obstacles. At the same time, the cutting edge is located between the upper punch and the mold cavity walls, rather than being embedded in either punch as in the case of the prior art where compression is along the height or width direction, thus preventing breakage due to adhesion to the punches during demolding, and achieving the desired compression ratio as well as sharpness of the cutting edge area.

While the present application is described herein with reference to specific exemplary embodiments, the scope of the present application is not limited to the details shown. Various modifications may be made to these details without departing from the principles of the present application.

## Claims

1. A compression mold for forming carbide drilling inserts, wherein the insert (1) has an insert coordinate system defined by the X1-Y1-Z1 directions, with the X1 direction corresponding to the insert width direction, the Y1 direction corresponding to the insert thickness direction, and the Z1 direction corresponding to the insert axial direction, and wherein the front face (1a) of the insert (1) comprises two cutting faces (2), with the intersection between the two cutting faces (2) forming a cutting edge (3), and at least one of the two cutting faces (2) is formed by moving a straight generatrix along a two-dimensional guide path to form a straight groove surface;
the compression mold has a mold coordinate system defined by the X2-Y2-Z2 directions, wherein the X2 direction corresponds to the mold width direction, the Y2 direction corresponds to the mold thickness direction, and the Z2 direction corresponds to the mold longitudinal direction, and wherein the compression mold comprises an upper punch (10), a lower punch (20), and a center mold (30), with the center mold (30) having a mold cavity (31) defined by mold cavity walls and accessible from the top and bottom, and the upper punch (10) and lower punch (20) each form a forming face;
the upper punch (10) and lower punch (20) are configured to be adapted for insertion along the longitudinal direction of the mold into the mold cavity (31) from above and below, respectively, and to compress carbide powder filled into the mold cavity (31) via the respective forming faces, thereby defining a shaping space formed by the respective forming faces of the upper punch (10) and lower punch (20) as well as the mold cavity walls at the final compression position, with the carbide powder shaped into the drilling insert (1) within the shaping space;
among them, the profile of the mold cavity (31) projected onto the X2-Y2 plane is designed to be the same as the outer profile of the insert (1) formed within the shaping space in the X2-Y2 plane, and a portion of the mold cavity walls coincides with the straight groove surfaces on the insert (1) formed within the shaping space, with the mold longitudinal direction parallel to the straight generatrix of the straight groove surfaces.

2. The compression mold according to Claim 1, wherein the profile of the mold cavity (31) projected onto the X2-Y2 plane is a closed loop, and a segment of this loop coincides with the two-dimensional guide path of the straight groove surfaces on the formed insert (1).

3. The compression mold according to Claim 2, wherein the segment comprises a continuous two-dimensional curve;
alternatively, the segment is composed of a combination of different line segments, with smooth transitions between each segment; for example, the segment may comprise a combination of different curved segments, or a combination of curved segments and straight segments.

4. The compression mold according to Claims 1-3, wherein the forming face of the upper punch (10) is configured to shape the insert portion located at the upper part of the outer profile of the insert (1) projected onto the X2-Y2 plane;
the forming face of the lower punch (20) is configured to shape the insert portion located at the lower part of the outer profile of the insert (1) projected onto the X2-Y2 plane.

5. The compression mold according to Claim 4, wherein the forming face of the upper punch (10) comprises a portion used to form the other cutting face out of the two cutting faces (2).
Optionally, the two cutting faces are straight groove surfaces formed by the parallel movement of their respective straight generatrixes along their respective two-dimensional guide paths.

6. The compression mold according to any one of Claims 1 - 5, wherein at the final compression position, the boundary line between the forming face of the upper punch (10) and the mold cavity walls contains a segment that overlaps with the entire cutting edge (3) of the formed insert (1).

7. The compression mold according to any one of Claims 1 - 6, wherein at the final compression position, a peripheral portion of the forming face of the upper punch (10) is separated from a corresponding peripheral portion of the forming face of the lower punch (20) by a first gap (40), wherein the first gap (40) is enclosed by the mold cavity walls, and the straight groove surfaces formed on the formed insert (1) are formed within the first gap (40).

8. The compression mold according to Claim 7, wherein at the final compression position, another peripheral portion of the forming face of the upper punch (10) is separated from another corresponding peripheral portion of the forming face of the lower punch (20) by a second gap (41), wherein the second gap (41) is enclosed by the mold cavity walls, and a chamfer between the bottom surface (1d) and a main surface (1b) of the formed insert (1) is formed within the second gap (41);
The chamfer between the bottom surface (1d) and another main surface (1b) of the formed insert (1) is formed by the corresponding portion of the forming face of the lower punch (20).

9. The compression mold according to any one of Claims 1 - 8, wherein the angular position of the insert (1) formed at the final compression position is defined in the following manner: when viewed in the Y2-Z2 plane, the Y1 direction of the formed insert (1) deviates from the Y2 direction by a first deviation angle; when viewed in the X2-Z2 plane, the X1 direction of the formed insert (1) deviates from the X2 direction by a second deviation angle.
For example, the first deviation angle is set in the range of 10 - 60 degrees, preferably 30 - 40 degrees; the second deviation angle is set in the range of 30 - 70 degrees, preferably 40 - 60 degrees.

10. The compression mold according to any one of Claims 1 - 8, wherein the angular position of the insert (1) formed at the final compression position is defined in the following manner: assuming that the insert (1) starts from an angular position where the X1-Y1-Z1 directions are parallel to the X2-Y2-Z2 directions, respectively, it first rotates by a first rotation angle around its X1 direction to generate new Y1 and Z1 directions, and then rotates by a second rotation angle around the new Y1 direction, thus giving the angular position of the formed insert (1) at the final compression position;
For example, the first rotation angle is set in the range of 10 - 60 degrees, preferably 30 - 40 degrees; the second rotation angle is set in the range of 30 - 70 degrees, preferably 40 - 60 degrees.
